(19) Europäisches Patentamt
European Patent Office
Office européen des brevets

(11) **EP 2 107 343 A2**

(12) **EUROPÄISCHE PATENTANMELDUNG**

(43) Veröffentlichungstag:
**07.10.2009 Patentblatt 2009/41**

(51) Int Cl.:
**G01D 5/244** *(2006.01)*

(21) Anmeldenummer: **09002381.3**

(22) Anmeldetag: **20.02.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **21.02.2008 DE 102008010374**

(71) Anmelder: **Blossfeld, Lothar**
**79108 Freiburg (DE)**

(72) Erfinder: **Blossfeld, Lothar**
**79108 Freiburg (DE)**

(54) **Winkelmesseinrichtung für ein rotierendes Gebersystem**

(57)    In einer elektronischen Winkelmesseinrichtung für ein axial rotierendes Gebersignal (B) erzeugt ein mit einer Modulationseinrichtung (5) gekoppeltes Sensorsystem (1) mindestens zwei modulierte Richtungskomponenten (ri) des rotierenden Signals (B). Im einfachsten Fall werden dabei orthogonale Richtungskomponenten der Drehebene erfasst. Die Modulation erfolgt mit periodischen Modulationssignalen (pi) aus einem Funktionsgenerator (6), der einen taktgesteuerten Winkelgeber (8) zur Bildung digitaler, rasch umlaufender Winkelwerte (β) enthält und mit einem digitalen Speicher (7) gekoppelt ist. Eine Auswerteeinrichtung (3) bestimmt aus einem Größenvergleich der modulierten Richtungskomponenten (ri), wann der rasch umlaufende Winkelwert (β) identisch mit dem jeweiligen Geberwinkel (α) ist und gibt ersteren direkt oder als einen abgeleiteten Wert mittels eines Ausgangssignals (sw) ab. Die periodischen Modulationssignale (pi) sind dabei sinus- oder kosinusförmige Signale, die dabei aber auch Verzerrungen des Gebersystems kompensieren können.

Fig. 5

**Beschreibung**

Berührungslose Messeinrichtungen zur Winkelmessung eines sich drehenden Teils sind entweder radial oder axial zur Drehachse angeordnet. Als Sensoren haben sich für robuste Anwendungen in der Praxis magnetempfindliche Sensoren, die den Hall- oder einen magnetorestriktiven Effekt ausnutzen, oder für weniger robuste dafür aber genauere Anwendungen optische Sensoren durchgesetzt. Radiale Anordnungen erfordern in der Regel nur einen Sensor in Verbindung mit einem kodierten Drehgeber, beispielsweise ein mechanisch oder optisch kodiertes Rad, das sich mit seiner Kodierung vor dem feststehenden Sensor dreht. Ein Nachteil der radialen Systeme ist ihre geringe Winkelauflösung, die von der meist relativ groben Kodierung des Geberrades, beispielsweise ein Zahnradgeber, abhängt. Eine feinere Auflösung treibt den Aufwand für die Kodierung und das Sensorsystem rasch in die Höhe.

Axiale Messeinrichtungen erfordern kein kodiertes Geberrad, sind daher kompakter und in ihrer Auflösung nicht durch die vorgegebene mechanische oder optische Kodierung beschränkt. Durch den Wegfall des kodierten Geberrades ist der mechanische Aufwand geringer und damit kostengünstiger. Dafür ist das Sensorsystem und die Auswertung aufwändiger, denn es erfordert die Aufnahme von mindestens zwei Richtungskomponenten des axial rotierenden Signals, aus denen dann dessen Winkelstellung über die trigonometrischen Beziehungen ermittelt wird. Ob dabei eine mathematische Verarbeitung nach vorheriger Digitalisierung erfolgt oder ob entsprechend wirkende analoge Schaltungen verwendet werden ist für die reine Winkelbestimmung unerheblich und hängt von anderen Randbedingungen und Erfordernissen ab..

Üblicherweise sind die Sensorempfindlichkeiten in der Messebene rechtwinklig zueinander angeordnet, so dass sie eine Sinus- und eine Kosinuskomponente des Gebersignals erfassen, aus denen dann der gewünschte Signalwinkel ermittelt wird. Kritisch bei diesem Verfahren sind Winkelstellungen, die genau in der Aufnahmerichtung der Sensoren oder senkrecht dazu liegen, da dort eine der beiden Signalkomponenten verschwindet und die andere nur unscharf über den schwer erfassbaren Durchgang durch den Maximalwert bestimmbar ist.

In DE 195 43 562 A1 wird als nächstliegender Stand der Technik eine Winkelmesseinrichtung mit zugehörigem Verfahren beschrieben, bei dem diese kritischen Winkelstellungen die Messung nicht mehr stören und bei dem die Erfassung der Winkelstellung ohne die Auswertung trigonometrischer Beziehungen erfolgt. Hierzu werden die Sensoren, welche die zwei Richtungskomponenten erfassen, jeweils mit einem um 90° gegeneinander phasenverschobenen Wechselstrom oder einer Wechselspannung als Eingangssignal versorgt. Die zugehörigen sinus- und kosinusförmigen Signale werden durch einen spannungsgeregelten und mit hoher Taktrate laufenden Rechteckoszillator mit nachgeschaltetem Tiefpass erzeugt. Statt mit sinusförmigen Signalen wird angegeben, dass die Sensoren mit Vorteil auch mit rechteckförmigen Signalen angesteuert werden können, die wie die ursprünglichen Rechecksignale ein Tastverhältnis von 50% aufweisen, aber um eine Viertelperiode gegeneinander verschoben sind. In beiden Fällen werden bei der Auswertung beide Ausgangssignale addiert und die resultierende Phase mit einer der beiden sinus- oder rechteckförmigen Anregungsphasen verglichen. Der Phasenvergleich erfolgt mittels einer Pulsweitenmodulationsschaltung mit nachgeschaltetem Mittelungstiefpass. Als Ausgangssignal der Messeinrichtung erscheint dann am analogen Tiefpassausgang eine zum gesuchten Winkel proportionale Gleichspannung.

In der Patentanmeldung US 2003/132761 A1 ist zur Winkelerfassung ebenfalls eine auf dem Modulationsprinzip basierende Messeinrichtung beschrieben, die aus Digitalbausteinen aufgebaut ist. Die Auswertung der Winkelstellung erfolgt ebenfalls über das Pulsweitenmodulationsprinzip. Zur Vermeidung der relativ großen Messverzögerung durch die Tiefassfilterung des pulsweitenmodulierten Ausgangssignals wird als Variante eine Integration der Ausgangssignale in Verbindung mit einer Abtasthalteschaltung beschrieben.

Die Patenschrift US 4 791 366 A beschreibt eine radiale Winkelmesseinrichtung mit einem an der Peripherie magnetisch kodierten Geberrad, das im Ausführungsbeispiel vier Magnetpole im Abstand von 90° aufweist. Über zwei periphere Magnetsensoren im Abstand von 45° wird das radiale Magnetfeld, also ein sinus- und kosinusförmiges Signal, abgegriffen, deren Phasenlagen von der jeweiligen Drehwinkelstellung des Geberrades abhängig sind. Es erfolgt ebenfalls eine Modulation der beiden Sensorsignale mit einem sinus- und kosinusförmigen Speisesignal aus einem Signalgenerator. Die Phasendifferenz aus der Summe der beiden modulierten Sensorsignale in Bezug zu einem der beiden Ausgangssignale des Signalgenerators wird mit einer rasch laufenden Pulszähleinrichtung erfasst. Zuvor werden aus den Signalen mittels Impulsformer Rechtecksignale gebildet, die zur Steuerung der zugehörigen Torschaltungen dienen.

In DE 198 19 069 A1 wird eine Schaltungsanordnung zur arithmetischen Verknüpfung eines Analogsignals mit einem in digitaler Form vorliegenden Wert sowie ein Verfahren und eine Schaltungsanordnung zur Bestimmung eines Winkels beschrieben, dessen Sinus- und Kosinuskomponenten als analoge Signale vorliegen. Die arithmetische Verknüpfung, die einer Modulation entspricht, erfolgt dabei als Multiplikation eines analogen Signals mit einem sinus- und kosinusförmigen Signal, die in digitalisierter Form vorliegen. Für die Multiplikation wird das analoge Signal einem Analog-Umpolglied zugeführt, dessen Steuereingang mit dem als Datenwort vorliegenden Wert des sinus- oder kosinusförmigen Signals über einen Sigma-Delta-Modulator gesteuert wird. Die Ausgangssignale derartiger Multiplizierer sind bekanntlich wiederum Analogsignale. Im Unterschied zu dem vorher gewürdigten Stand der Technik kann die Winkelbestimmung des resultierenden Summensignals bei dieser Schaltungsanordnung nicht durch einen Phasenvergleich erfolgen, weil die sinus- und kosinusförmigen Modulationssignale nicht durch einen Signalgenerator mit gleichförmig zunehmendem Winkel erzeugt werden, sondern durch einen mit Sigma-Delta-Modulatoren betriebenen Regelkreis, der in Abhängigkeit von einem geschätzten Winkelwert die für die Regelung erforderlichen Modulationswerte aus einer gespeicherten Tabelle entnimmt. Der Regelvorgang ist dann abgeschlossen, wenn das Summensignal der modulierten Empfangssignale durch Nachregelung des geschätzten Winkelwertes auf den Wert Null geregelt ist. In diesem Fall ist der geschätzte Winkelwert dem gesuchten Winkelwert gleich.

Wie bei dem bekannten Stand der Technik besteht bei der Erfindung ein erster Verfahrensschritt darin, dass die gemessenen Richtungskomponenten des Gebersignals zusätzlich mit einem periodischen Signal moduliert werden, dessen Umlauffrequenz mindestens eine oder besser zwei Größenordnungen höher ist als die Umlauffrequenz des Gebersignals. Als Modulationssignale werden sinus- oder kosinusförmige Signale verwendet. Wie später noch genauer erläutert wird, gibt es ein Auswertekriterium bezüglich der modulierten Richtungskomponenten, das genau dann anspricht, wenn der umlaufende Winkelwert der Modulationssignale dem gesuchten Geberwinkel gleich ist. Das Auswertekriterium ist dabei frei von zeitaufwendigen trigonometrischen Zwischenschritten, so dass die Winkelerfassung sehr rasch einem sich ändernden Geberwinkel folgen kann.

Die hohe Erfassungsgeschwindigkeit des gesuchten Winkels begründet einen wesentlichen Vorteil der Erfindung. Zur Steigerung der Erfassungsgeschwindigkeit ist es ferner sinnvoll, die Messeinrichtung möglichst weitgehend als integrierte Schaltung zu realisieren. Besonders vorteilhaft ist bei Messeinrichtungen, die auf einem magnetischen Prinzip beruhen, die Verwendung des Hall-Effekts, da die Hallsensoren als Oberflächenelemente einer CMOS-Struktur herstellbar sind, wobei die Regelungs-, Versorgungs-, Auswerte- und sonstigen Schaltungseinrichtungen, beispielsweise für einen Überspannungs- und Verpolungsschutz, mitintegrierbar sind, so dass die gesamte sensorseitige Messeinrichtung ein kompaktes Bauelement darstellt und mit nur sehr wenigen Anschlusselementen auskommt.

Die Erfindung und vorteilhafte Ausgestaltungen werden nun anhand der Figuren der Zeichnung näher dargestellt, wobei die Figuren 1 bis 4 dem bekannten Stand der Technik zuzurechnen sind:

Fig. 1 zeigt die Grundelemente einer axialen Messeinrichtung mit einem rotierenden Geber,
Fig. 2 zeigt ein typisches Blockschaltbild einer sensorseitigen Messeinrichtung,
Fig. 3 zeigt die orthogonalen Richtungskomponenten eines rotierenden Gebersignals,
Fig. 4 zeigt ein rotierendes Gebersignal, das mit drei Richtungskomponenten erfasst wird,
Fig. 5 zeigt als Blockschaltbild ein Ausführungsbeispiel der Erfindung,
Fig. 6 zeigt den Sinus- und Kosinusverlauf von zwei modulierten Richtungskomponenten,
Fig. 7 zeigt den Summenverlauf von zwei modulierten Richtungskomponenten,
Fig. 8 zeigt die modulierten Richtungskomponenten bei hohem Oberwellenanteil und
Fig. 9 zeigt schematisch die Geberwinkelerfassung mit einer Interpolation.

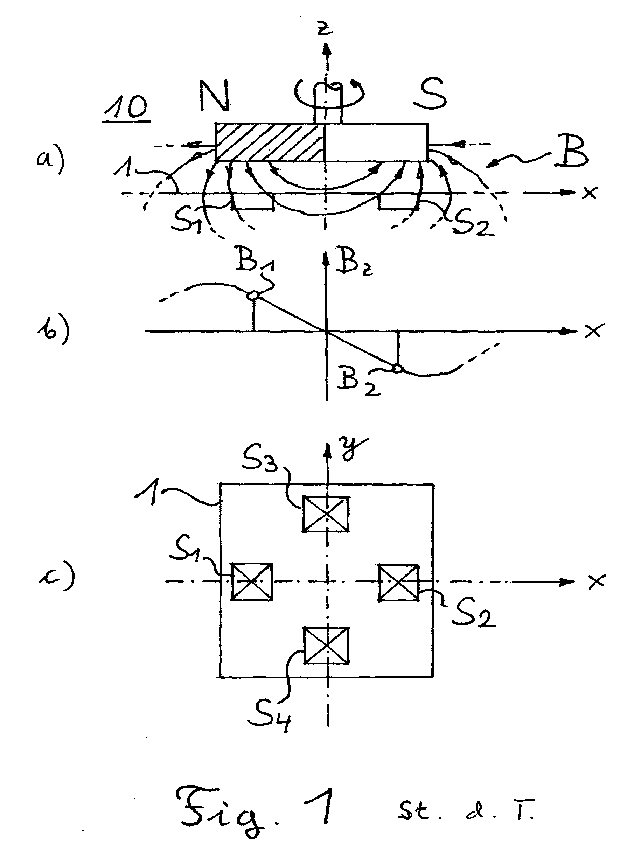

In Fig. 1 ist schematisch eine bekannte axialen Winkelmesseinrichtung, dessen Gebersystem 10 auf dem Magneteffekt beruht, dargestellt. Im oberen Teil a) erkennt man den drehbaren magnetischen Geber, dessen Magnetlinien das darunter angebrachte Sensorsystem 1 teilweise schneiden. Der mittlere Teil b) zeigt schematisch den Feldlinienverlauf der senkrechten Komponenten der Magnetlinien. Der untere Teil c) zeigt schließlich in Aufsicht die Lage der vier Sensorelemente S1 bis S4 des Sensorsystems 1. Eine Messeinrichtung nach diesem Prinzip ist beispielsweise in der Zeitschrift "elektronik industrie", Nr. 7-2006, Seiten 2 bis 5 unter dem Titel "Was Sie immer schon über Hallsensoren wissen wollten / Kleiner Effekt - Große Wirkung" ausführlich beschrieben.

Fig. 1a) zeigt als Gebersystem 10 ein drehbar angeordnetes Magnetpolpaar, dessen Drehachse bezüglich einem dreidimensionalen Koordinatennetz x, y, z in Richtung der z-Achse weist. Die vom magnetischen Nordpol N zum magnetischen Südpol S verlaufenden Magnetlinien B durchdringen dabei teilweise zwei Hall-Sensorelemente S1 und S2, die in Richtung der x-Achse angeordnet sind. Sie sind Teil des Sensorsystems 1, das sich unterhalb der Drehebene des Magnetpolpaares befindet und vereinfacht im Schnitt dargestellt ist. Die in Richtung der y-Achse angeordneten Sensorelemente S3 und S4 sind der besseren Übersicht wegen nicht eingezeichnet. Ihre Position zeigt in Aufsicht Fig. 1c).

Fig. 1b) zeigt den Verlauf der senkrecht zur Oberfläche des Sensorsystems 1 wirksamen Feldkomponente Bz des Magnetfeldes. Diese in Richtung der z-Achse wirkende Feldkomponente Bz kann von den Hall-Sensorelementen S1 bis S4 an der Oberfläche des Sensorsystems 1 erfasst werden. Die Sensorebene ist dabei Bezugsebene für den Feldlinienverlauf. Entlang der x-Achse verläuft die Feldstärke etwa linear zwischen einem positiven und negativen Extremwert und geht bei x = 0 durch den Nullpunkt. Wenn ein Sensorenpaar, beispielsweise die Sensoren S1 und S2, in diesem linearen Bereich liegen, dann messen sie die Feldstärken B1 B2, die einander entgegengerichtet sind aber etwa gleiche Beträge aufweisen. Über eine Gradientenmessung ist somit eine Messgröße erfassbar, die einer in Richtung der x-Achse weisende Komponente des Magnetfeldes entspricht. Wenn das Magnetfeld exakt in Richtung der x-Achse ausgerichtet und in y-Richtung verzerrungsfrei ist, dann weist das Magnetfeld am Ort der beiden Sensoren S3 und S4 gleiche Feldstärken auf, im Idealfall sogar die Feldstärke Null. Die beiden Sensorelemente S3 und S4 messen somit in Richtung der y-Achse den Gradientenwert Null.

Fig. 1c zeigt schließlich in Aufsicht das Sensorsystem 1 mit den quadratisch angeordneten Hall-Sensorelementen S1 bis S4 zur Bestimmung der Magnetfeldkomponenten in Richtung der x- und der y-Achse. Zur verbesserten Ausschaltung von Störfeldern können die Hall-Sensorelemente S1 bis S4 jeweils durch Differenzsensoren ersetzt werden. Die relativ umständliche Gradientenmessung kann entfallen, wenn die Richtung des Magnetfeldes in der x/y-Ebene durch Sensoren bestimmt wird, die direkt in Richtung der x- und y-Achse empfindlich sind, beispielsweise durch magnetoresistive Sensoren, oder bei denen das Magnetfeld durch Magnetfeldleiter entsprechend umgelenkt wird.

Bei optischen Messeinrichtungen dreht sich als Geber beispielsweise eine aktive oder passive Lichtquelle mit einem sinusförmigen Verlauf. Die in der Drehebene liegende Sensoreinrichtung weist beispielsweise zwei orthogonal zueinander ausgerichtete Lichtspalte auf, hinter denen sich lichtempfindliche Sensoren befinden. Die Spalte erübrigen sich, wenn die Sensoren selbst richtungsempfindlich sind. Im elektrooptischen Bereich sind viele Verfahren bekannt, mit denen richtungsabhängige Signalkomponenten erfasst werden können.

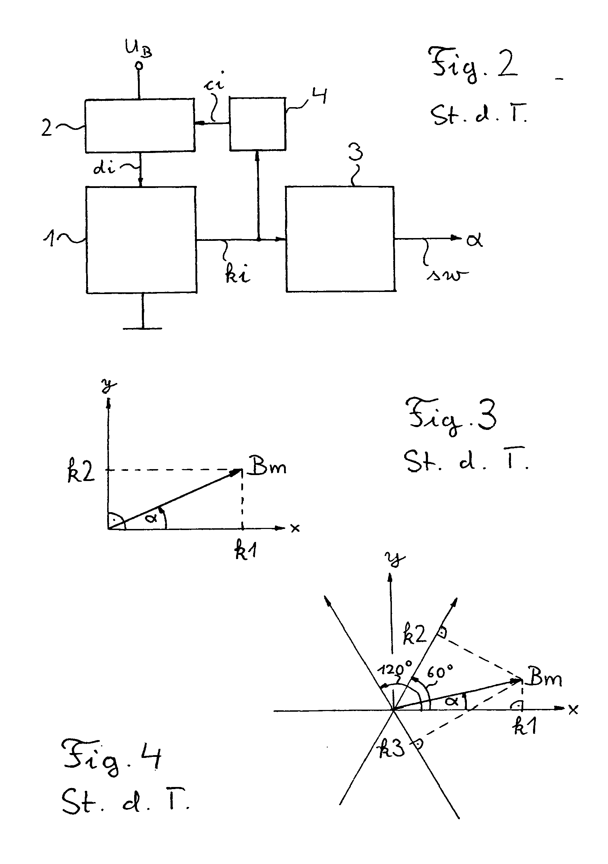

Fig. 2 zeigt als Blockschaltbild die typischen sensorseitigen Funktionseinheiten einer axialen Winkelmesseinrichtung mit rein trigonometrischer Signalverarbeitung nach dem Stand der Technik. Der Schaltungsblock 1 symbolisiert das Sensorsystem, das beispielsweise entsprechend Fig. 1 die vier Hall-Sensoren S1 bis S4 enthält. Die zugehörige Speiseeinrichtung 2 erzeugt aus einer Versorgungsspannung $U_B$ die Einspeisesignale di, die entweder Ströme oder Spannungen sind, je nach dem ob die Sensorelemente strom- oder spannungsgesteuert sind. Für Hall-Sensoren sind beispielsweise beide Versionen möglich. Als Ausgangssignale liefert das Sensorsystem 1 die Richtungskomponenten ki, die in der Regel einer Sinus- und Kosinuskomponente des Gebersignals entsprechen. Die Auswertung dieser Signale ki erfolgt in einer Auswerteeinrichtung 3, die über geeignete, in der Regel digitale Verfahren aus den Richtungskomponenten ki den gesuchten Geberwinkel $\alpha$ bestimmt und als Ausgangssignal sw abgibt. Die Winkelbestimmung kann dabei mittels gespeicherter Winkeltabellen erfolgen, in denen die Sinus-, Kosinus- und Tangenswerte für die trigonometrischen Umformungen gespeichert sind. Ein anderer Weg bietet sich über den bekannten Cordic-Algorithmus an, der als iteratives Verfahren ohne Winkeltabellen auskommt und für die digitale Verarbeitung im binären Zahlensystem sehr geeignet ist. Eine Vorraussetzung aller Verfahren ist jedoch, dass die Richtungskomponenten ki identische Amplitudenwerte aufweisen. Wenn dies nicht gewährleistet ist, ist eine Abgleichvorrichtung 4 erforderlich, die Korrektursignale ci für die Speiseeinrichtung 2 erzeugt. Es gibt hierzu verschiedene Abgleichverfahren, die dem Fachmann bekannt sind.

In Fig. 3 sind in der x/y-Messebene schematisch die orthogonalen Richtungskomponenten k1 und k2 und ein Gebersignal B mit der Amplitude Bm und dem Geberwinkel $\alpha$ dargestellt. Die orthogonalen Richtungskomponenten k1 und k2 ergeben sich aus den einfachen trigonometrischen Beziehungen als Sinus- oder Kosinusfunktion:

$$k1 = Bm \bullet \cos\alpha = Bm \bullet \sin(\alpha + 90^\circ) \quad \text{und} \quad k2 = Bm \bullet \sin\alpha = Bm \bullet \cos(\alpha - 90^\circ).$$

In Fig. 4 ist die x/y-Messebene gleichwinklig in drei Richtungskomponenten k1, k2 und k3 aufgeteilt, deren Achsen in 0°-, 60°- und 120°-Richtung weisen. Das Gebersignal B mit der Amplitude Bm hat den Richtungswinkel $\alpha$. Die drei Richtungskomponenten k1, k2 und k3 ergeben sich aus den trigonometrischen Beziehungen:

$$k1 = Bm \bullet \cos\alpha = Bm \bullet \sin(\alpha + 90^\circ),$$

$$k2 = Bm \bullet \cos(\alpha - 60^\circ) = Bm \bullet \sin(\alpha + 30^\circ)$$

und

$$k3 = Bm \bullet \cos(\alpha - 120^\circ) = Bm \bullet \sin(\alpha - 30^\circ).$$

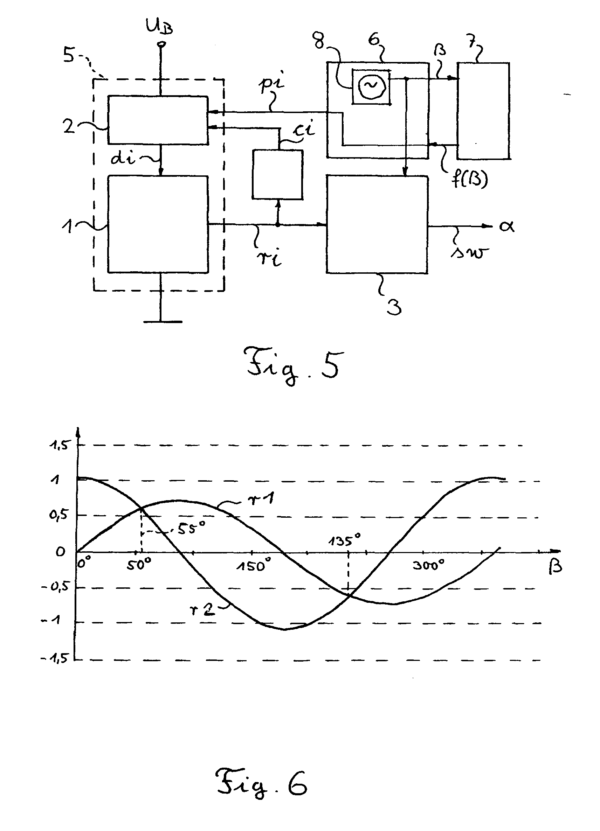

Fig. 5 zeigt als Blockschaltbild ein Ausführungsbeispiel der Erfindung mit einem gegenüber dem Stand der Technik verbesserten Modulations- und Auswerteverfahren. Soweit die Funktionseinheiten weitgehend denen der bekannten axialen Messeinrichtung von Fig. 2 entsprechen, werden der besseren Vergleichbarkeit wegen die selben Bezeichnungen und Bezugszeichen verwendet. Die spannungs- oder stromgesteuerten Sensoren des Sensorsystems 1 werden von der Speiseeinrichtung 2 gespeist, die ihrerseits an der Versorgungsspannung $U_B$ hängt. Anders als in der rein trigonometrisch arbeitenden Messeinrichtung von Fig. 2 liefert das Sensorsystem 1 aus der Gebersignalmessung aber nicht die reinen Richtungskomponenten ki, sondern modulierte Richtungskomponenten ri. Das Sensorsystem 1 und die Speiseeinrichtung 2 bilden zusammen eine Modulationseinrichtung 5. Hierzu werden der Speiseeinrichtung 2 periodische Modulationssignale pi aus einem Funktionsgenerator 6 zugeführt. Mit den periodischen Modulationssignalen pi werden die Einspeisesignale di für die einzelnen Sensorelemente periodisch moduliert, was auch als Modulation ihrer Empfindlichkeit angesehen werden kann. Die Modulation der Richtungskomponenten ki mittels der Speiseeinrichtung 2 ist besonders vorteilhaft, weil dies über einfache analoge Schaltungen erfolgt, wie Stromspiegel oder addierende Operationsverstärker, die als Regelbausteine sowieso in der Speiseeinrichtung 2 vorhanden oder leicht ergänzbar sind. Natürlich kann die Modulation oder Multiplikation auch nach den Sensorelementen erfolgen, dies ist aber aufwändiger.

Die gemäß der Erfindung bewirkte Weiterbildung der bekannten Messeinrichtungen mit Modulation der Richtungskomponenten wird dadurch ermöglicht, dass die periodischen Modulationssignale pi im Funktionsgenerator 6 nicht durch die Rechtecksignale eines spannungsgesteuerten Oszillators gebildet werden, sondern durch einen taktgesteuerten Winkelgeber 8, der einen rasch umlaufenden digitalen Winkelwert $\beta$ erzeugt. Hierzu ist der taktgesteuerte Winkelgeber 8 mit einem Speicher 7 gekoppelt, der zu jedem Winkelwert $\beta$ den zugehörigen Funktionswert $f(\beta)$ der periodischen Funktion enthält. Im Idealfall ist dies eine Sinus- oder Kosinusfunktion. Derartige taktgesteuerte Winkelgeber sind auch unter der Bezeichnung "digitaler Oszillator" bekannt. Sie enthalten in der Regel einen Taktgenerator, einen mit einem Inkrementwert gespeisten Addierer und einen überlaufenden Akkumulator, dessen Ausgang mit dem zweiten Eingang des Addierers verbunden ist. In Verbindung mit einem digitalen Speicher und einem Digital-Analogumsetzer werden zu den umlaufenden digitalen Winkelwerten die zugehörigen analoge Kreisfunktionen wie Sinus und Kosinus gebildet.

Wenn Verzerrungen des Gebersignals oder der Sensorcharakteristik auszugleichen sind, dann ist es von Vorteil, wenn die gespeicherten Funktionswerte als korrigierte Werte vorliegen. Ist der Speicher 7 unabhängig von der Herstellung programmierbar, dann lässt dies eine optimale Anpassung an unterschiedliche Geber- oder Sensorcharakteristika zu. Die gespeicherten Funktionswerte sind digital und werden, bevor sie der Modulationseinrichtung 5 bzw. der Speiseeinrichtung 2 zugeführt werden, in analoge Signale umgesetzt. Die Auswertung der modulierten Richtungskomponenten ri in der Ausgabeeinrichtung 3 erfolgt mittels eines Vergleichers und/oder ähnlichen Einrichtung, deren Funktion anhand der nachfolgenden Auswertebeispiele beschrieben wird. Ob als Ausgangssignal sw der Geberwinkel $\alpha$ und/oder eine davon abgeleitete Größe von der Ausgabeeinrichtung 3 gebildet werden, hat mit der Modulation nichts zu tun. Die Abgleicheinrichtung 4 bestimmt in einem separaten Abgleichvorgang die Korrektursignale ci für die Speiseeinrichtung 2.

In Fig. 6 sind von einem orthogonalen Winkelmesssystem in einem Diagramm die beiden modulierten Richtungskomponenten r1 und r2 in Abhängigkeit von dem umlaufenden Winkelwert $\beta$ dargestellt. Der Geberwinkel $\alpha$ ist dabei konstant und hat einen Wert von 55°. Für die erste Richtungskomponente k1 ergibt sich somit ein Wert von Bm $\cdot$ cos($\alpha$), wobei Bm die Amplitude des Gebersignals B ist. Der Term Bm $\cdot$ cos($\alpha$) bildet die erste Richtungskomponente k1 von Fig. 3 und Bm $\cdot$ sin($\alpha$) die zweite Richtungskomponente k2. Für $\alpha$ = 55° gelten folgende Werte für den Sinus und Kosinus:

$$\sin(55^o) = 0,820 \quad \text{und} \quad \cos(55^o) = 0,574.$$

Die jeweilige Modulation der Richtungskomponenten k1, k2 mit einem periodischen Signal entspricht einem rotierenden Signal, das sich dem aktuellen Messzustand überlagert. Die Richtung dieses Signals wird durch den umlaufenden Winkelwert $\beta$ vorgegeben. Im Unterschied zu Fig. 3 wird vom rotierenden Signal in Richtung der ersten Richtungskomponente k1 aber der sin($\beta$)-Anteil und in Richtung der zweiten Richtungskomponente k2 der cos($\beta$)-Anteil überlagert. Dies entspricht jeweils einer Überlagerung mit einem orthogonalen Signal. Die Modulation erfolgt also mit zwei zueinander phasenverschobenen Modulationssignalen p1 = P $\cdot$ sin($\beta$) und p2 = P $\cdot$ cos($\beta$), wobei P die für beide Funktionen identische Amplitude ist und beispielsweise den Normwert "1" aufweist.

Da die Modulation mathematisch einer Multiplikation entspricht, ergeben sich für die modulierten Richtungskomponenten r1 und r2 folgende Beziehungen:

$$r1 = Bm \cdot P \cdot \cos(\alpha) \cdot \sin(\beta) \quad \text{und} \quad r2 = Bm \cdot P \cdot \sin(\alpha) \cdot \cos(\beta)$$

oder etwas allgemeiner ausgedrückt

$$r1 = a \cdot \cos(\alpha) \cdot \sin(\beta) \quad \text{und} \quad r2 = b \cdot \sin(\alpha) \cdot \cos(\beta).$$

Beide mathematische Terme r1 und r2 werden gleich groß, wenn a = b und $\alpha = \beta$ ist. Mittels eines Amplitudenabgleichs ist die Bedingung a = b aber auch bei einer Abweichung exakt einstellbar. Wenn durch einen Vergleich der beiden modulierten Richtungskomponenten r1, r2 in einem entsprechenden Vergleicher festgestellt wird, dass sie gleich groß sind, dann folgt daraus, dass auch die Winkel $\alpha$ und $\beta$ gleich groß sein müssen. Das Kriterium der gleichen Signalgrößen ist über einen elektronischen Vergleich der modulierten Richtungskomponenten r1 und r2 leicht feststellbar und erfordert keinerlei trigonometrische Umformungen. Ferner ist zu diesem Zeitpunkt der umlaufende Winkelwert $\beta$ des taktgesteuerten Winkelgebers, der auch der Bildung der periodischen Modulationssignale p1 und p2 dient, bekannt und damit auch der gesuchte Geberwinkel $\alpha$. Über eine entsprechende Einrichtung wird dann die Ausgabeeinrichtung 3 so gesteuert, dass als Ausgangssignal sw der rasch umlaufende digitale Winkelwert $\beta$ oder eine davon abgeleitete analoge oder digitale Größe abgegeben wird.

Anstatt die Größe der beiden Signale r1, r2 miteinander zu vergleichen, kann auch ihre Summe bzw. Differenz, je nach der zu verwendenden trigonometrischen Formel, gebildet werden.

Gegebenenfalls wird dazu eines der Signale r1, r2 mit umgekehrtem Vorzeichen addiert. Dann erweist sich nämlich der Nulldurchgang der Summenkurve s als Kriterium für den gesuchten Geberwinkel $\alpha$. Diese Beziehung ist auch aus der trigonometrischen Formel

$$\sin(\alpha - \beta) = \sin(\alpha) \cdot \cos(\beta) - \cos(\beta) \cdot \sin(\alpha) \text{ ableitbar, denn mit } \alpha = \beta \text{ wird } \sin(\alpha - \beta) = 0.$$

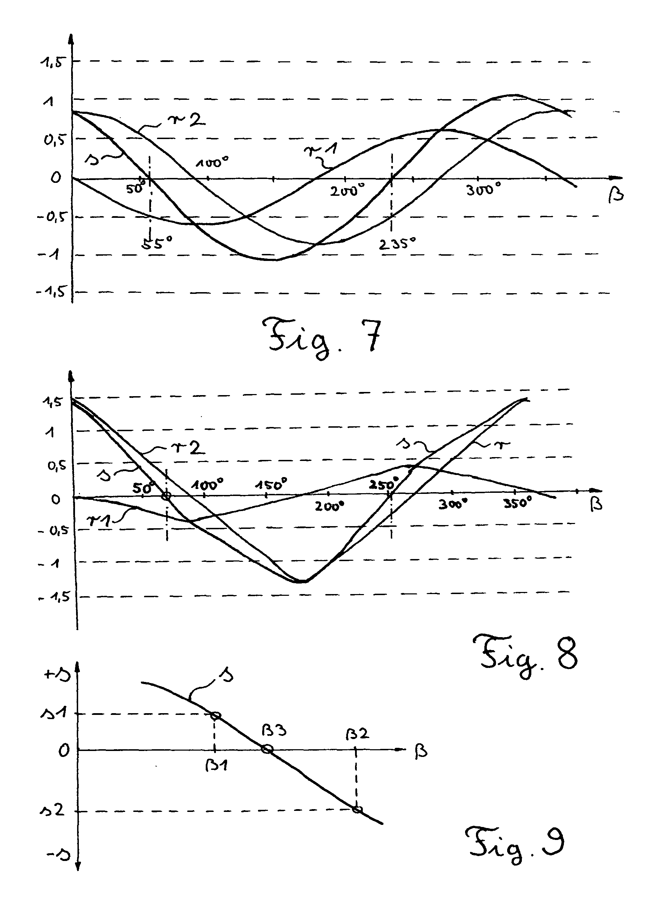

Das Umlaufdiagramm einer derartigen Summenkurve s als Funktion des umlaufenden Winkels $\beta$ ist in Fig. 7 für den Geberwinkel $\alpha = 55°$ dargestellt. Die Mehrdeutigkeiten im Abstand von 180° beim Größenvergleich oder bei der Summenauswertung lassen sich auf einfache Weise durch die Bestimmung des Nulldurchgangsgradienten der Summenkurve s ausräumen.

Bei einem Sensorsystem mit drei Richtungskomponenten k1, k2, k3 mit den Winkeln 0°, 60° und 120° entsprechend Fig. 4 werden die modulierten Richtungskomponenten ri mit den verallgemeinerten Amplituden a, b und c wie folgt gebildet:

$$r1 = a \cdot \cos \alpha \cdot \sin(\beta)$$

$$r2 = b \cdot \cos(\alpha - 60^o) \cdot \sin(\beta - 60^o)$$

$$r3 = c \cdot \cos(\alpha - 120^o) \cdot \sin(\beta - 120^o)$$

Unter der Annahme gleich großer Amplituden a, b und c wird die Summe s = r1 + r2 + r3 wieder dann zu Null, wenn die Winkel $\alpha$ und $\beta$ einander gleich sind. Ein Zahlenbeispiel mit den Winkeln $\alpha = \beta = 10°$ und den Amplituden a = b = c = 1 soll dies verdeutlichen:

$$r1 = a \cdot \cos \alpha \cdot \sin \beta = \cos 10^o \cdot \sin 10^o = 0{,}9848 \cdot 0{,}1736 = 0{,}1710$$

$$r2 = b \cdot \cos(\alpha - 60^o) \cdot \sin(\beta - 60^o) = \cos(-50^o) \cdot \sin(-50^o) = 0{,}6428 \cdot (-0{,}7660) = -0{,}4924$$

$$r3 = c \cdot \cos(\alpha - 120^{o}) \cdot \sin(\beta - 120^{o}) = \cos(-110^{o}) \cdot \sin(-110^{o}) = -0,3420 \cdot (-0,9397) = 0,3214$$

Also kann der Nulldurchgang der Summenkurve s wieder als einfaches Kriterium für die Erfassung des Geberwinkels $\alpha$ verwendet werden, denn der Wert des umlaufenden Winkels $\beta$, der dem Geberwinkel $\alpha$ gleich ist, ist aus der Bildung der Modulationssignale pi bekannt.

Allgemein gilt für eine beliebige Anzahl N>1 von modulierten Richtungskomponenten ri folgende Summenformel s:

$$s = \Sigma ri(\alpha, \beta) = \Sigma\{ai \cdot \sin(\beta - (i-1) \cdot 360/2N) \cdot \sin(\alpha - (i-1) \cdot 360/2N + 90)\} \quad \text{wobei } i = 1.....N$$

bei positivem Gradienten durch den Nullpunkt und

$$s = \Sigma ri(\alpha, \beta) = \Sigma\{-ai \cdot \sin(\beta + (i-1) \cdot 360/2N) \cdot \sin(\alpha + (i-1) \cdot 360/2N + 90)\}$$

bei negativem Gradienten durch den Nullpunkt. Wie aus diesen Formeln zu erkennen ist, lässt sich eine einfache Justierung des Gebers und die Gleichheit der Amplituden der modulierten Richtungskomponenten mit Hilfe der richtigen Wahl des Geberwinkels $\alpha$ erzielen. So wird entsprechend dem obigen Beispiel mit N = 3 die Richtungskomponente r1 = 0 bei $\alpha$ = 90°, die Richtungskomponente r2 = 0 bei $\alpha$ = 150° und schließlich die Richtungskomponente r3 = 0 bei $\alpha$ = 210°, und das unabhängig von der Stellung des umlaufenden Winkelwerts $\beta$. Die Amplituden der anderen Signale können mit Hilfe der daraus bekannten Winkel $\alpha$, $\beta$ bestimmt werden. Dazu sind unabhängig von der Anzahl der modulierten Richtungskomponenten ri nur zwei Messungen notwendig. Auch kann die Amplitude der Summenkurve s = $\Sigma ri(\alpha, \beta)$ zur Erkennung von Amplitudenfehlern der modulierten Richtungskomponenten ri herangezogen werden.

Fig. 8 zeigt schließlich das Umlaufdiagramm der modulierten Richtungskomponenten r1, r2 und die zugehörige Summenkurve s beim Vorliegen eines hohen Oberwellenanteils des Gebersignals B. Aus den sinus- und kosinusförmigen Signalen sind nahezu Dreieckssignale geworden. Die Darstellung gilt für den Geberwinkel $\alpha$ = 70°. Sie lässt erkennen, dass trotz der vorhandenen Verzerrungen der Nulldurchgang der Summenkurve immer noch sicher bei 70° erfassbar ist. Dies hängt damit zusammen, dass die Verzerrungen des Geberumlaufs und die entsprechenden Verzerrungen der periodischen Modulationssignale pi als Harmonische anzusehen sind, also nur mit vorwiegend ungeraden Frequenzvielfachen verknüpft sind. Wenn nun für die Amplituden der Oberwellen die gleiche Beziehung wie für die Grundwelle gilt - also jeweils Amplitudengleichheit - dann gilt bei Gleichheit der Oberwellen-Richtungskomponenten, dass auch für die Oberwellen die Winkel $\alpha$ und $\beta$ einander gleich sind.

Die Winkelauflösung hängt bei der Erfindung zunächst einmal von der Schrittweite des umlaufenden Winkelwertes $\beta$, also dem Inkrementwert des digitalen Oszillators, ab. Je größer die Schrittweite ist, desto rascher erfolgt ein Umlauf, aber desto geringer wird auch die Auflösung. Da bei der Auswertung trigonometrische Umformungen nicht erforderlich sind und das Kriterium nur eine einfache Schwellenentscheidung aufweist, lässt sich schon grundsätzlich eine hohe Umlaufgeschwindigkeit erreichen, die in den meisten Fällen um Größenordnungen die Winkelgeschwindigkeiten der mechanischen Gebereinrichtungen überschreitet. Die Verkleinerung der Schrittweite zur Erzielung einer höheren Winkelauflösung findet jedoch ihre Begrenzung im Speicher 7, dessen Größe mindestens bei der Mitintegration nicht beliebig erweiterbar ist. Hier erweist sich ein interpolierendes Verfahren zur Winkelerfassung als zweckmäßig. Fig. 9 zeigt hierzu schematisch einen Ausschnitt der Summenkurve s im Bereich des Nulldurchgangs. Zur Interpolation werden lediglich die beiden Winkelwerte $\beta1$ und $\beta2$ vor und nach Erreichen des Schwellenkriteriums und die zugehörigen Werte s1 und s2 der Summenkurve s festgehalten und mittels einer linearen Interpolation der exakte Durchgangspunkt $\beta3$ durch die Schwelle bei s = 0 bestimmt. Der interpolierte Nulldurchgangspunkt $\beta3$ und damit der gesuchte Geberwinkel $\alpha$ ergibt sich zu:

$$\beta3 = \beta1 + s1 / (s1 - s2) \cdot (\beta2 - \beta1)$$

Hierbei ist ($\beta2$ - $\beta1$) die Schrittweite des umlaufenden Winkelwertes $\beta$ und (s1 - s2) die zugehörige Differenz auf der Summenkurve s mit s2 als negativem Wert.

Für die Auswertung der Signale wird auf den besonderen Vorteil der Erfindung hingewiesen, dass von den modulierten Richtungskomponenten ri nur Wechselsignale im Frequenzbereich des rasch umlaufenden Winkelwertes β auszuwerten sind und sich somit instabile Gleichspannungs- oder Gleichstromkomponenten der Sensorelemente und der Verarbeitung nicht auswirken. Dies erfolgt mittels geeigneter Filter, die im einfachsten Fall Hochpässe sind, die für Signale im Bereich der raschen Umlauffrequenz des Winkelwertes β durchgängig sind. Damit werden die negativen Einflüsse von Temperaturdriften, Alterung oder mechanischen Fehlern durch Justierung oder Verschleiß automatisch unterdrückt. Dies ermöglicht für die Schaltung eine konsequente gleichtaktfreie Schaltungsentwicklung (" common mode rejection design"), wie sie zum Beispiel für Anwendungen im Automobilsektor, Maschinenbau und sicherheitsrelevanten Bereichen unerlässlich ist. Durch die hohen Umlauffrequenzen sind diese Forderungen auch mit monolithisch integrierbaren Schaltungstechniken implementierbar.

<u>Bezugszeichenliste:</u>

| 1 | Sensorsystem |
|---|---|
| 2 | Speiseeinrichtung |
| 3 | Auswerteeinrichtung |
| 4 | Abgleicheinrichtung |
| 5 | Modulationseinrichtung |
| 6 | Funktionsgenerator |
| 7 | Speicher |
| 8 | taktgesteuerter Winkelgeber |
| 10 | Gebersystem |
| B | Gebersignal |
| B1, B2 | erster bzw. zweiter Wert der Feldkomponente Bz in z-Richtung (siehe Fig. 1) |
| Bz | Feldkomponente in z-Richtung (siehe Fig. 1) |
| Bm | Amplitude des Gebersignals |
| S1 bis S4 | Sensorelemente |
| sw | Ausgangssignal |
| ci | Korrektursignale |
| di | Einspeisesignale |
| x, y,z | Raumrichtungen |
| ki; k1, k2, k3 | Richtungskomponenten |
| pi; p1, p2 | periodische Modulationssignale |
| P | Amplitude der periodischen Modulationssignale |
| ri; r1, r2, r3 | modulierte Richtungskomponenten |

| f(β) | Funktionswert der periodischen Funktion |
|---|---|
| s | Summenkurve, Summenformel |
| s1, s2 | Werte der Summenkurve (siehe Fig. 9) |
| α | Geberwinkel |
| β | umlaufender Winkelwert |
| β1, β2, β3 | umlaufende Winkelwerte (siehe Fig. 9) |

**Patentansprüche**

1. Winkelmesseinrichtung für ein rotierendes Gebersignal (B) mit einem Sensorsystem (1) zur Bildung von Richtungskomponenten (ki) des rotierenden Gebersignals (B), miteiner aus einem Funktionsgenerator (6) mit periodischen Modulationssignalen (pi) gespeisten Modulationseinrichtung (5) zur Bildung von mindestens zwei modulierten Richtungskomponenten (ri), die einer Auswerteeinrichtung (3) zugeführt sind um die jeweiligen Geberwinkel (α) des rotierenden Gebersignals (B) zu bestimmen und diese mittels eines Ausgangssignals (sw) abzugeben, dabei entsprechen die periodischen Modulationssignale (pi) gegenüber dem rotierenden Gebersignal (B) einem rasch umlaufendem Signal,
**dadurch gekennzeichnet, dass**

   - der Funktionsgenerator (6) einen taktgesteuerten Winkelgeber (8) enthält, der als digitalen Wert einen rasch umlaufenden Winkelwert (β) zur Bildung des periodischen Modulationssignals (pi) generiert,
   - der taktgesteuerte Winkelgeber (8) mit einem digitalen Speicher (7) gekoppelt ist, der zu jedem der rasch umlaufenden Winkelwerte (β) zugehörige Funktionswerte des jeweiligen periodischen Modulationssignals (pi) enthält, und
   - die Auswerteeinrichtung (3) einen Vergleicher für die Summe oder Differenz der modulierten Richtungssignale (ri) und eine Einrichtung enthält, die bei Erreichen eines definierten Vergleichskriteriums den zugehörigen Wert des rasch umlaufenden Winkelwertes (β) als den gesuchten Geberwinkel (α) der Auswerteeinrichtung (3) zur direkten Ausgabe und/oder einer davon abgeleiteten analogen oder digitalen Größe zuführt.

2. Winkelmesseinrichtung nach Anspruch 2, **dadurch gekennzeichnet, dass** die periodischen Modulationssignale (pi) eine Vorverzerrung aufweisen, um die räumliche Verzerrung des rotierenden Gebersignals (B) gegenüber einem reinen Sinus- oder Kosinusverlauf zu kompensieren.

3. Winkelmesseinrichtung nach Anspruch 1, **dadurch gekennzeichnet, dass** die Auswerteeinrichtung (3) Filter zur Bandbreitenbegrenzung enthält, das Gleichanteile der modulierten Richtungskomponenten (ri) unterdrückt.

4. Winkelmesseinrichtung nach Anspruch 4, **dadurch gekennzeichnet, dass** die Filter zur Bandbreitenbegrenzung Bandpass- oder Hochpassfilter sind, deren Durchlassbereiche sich um die Umlauffrequenz des rasch umlaufenden Winkelwertes (β) erstrecken.

5. Winkelmesseinrichtung nach Anspruch 1, **dadurch gekennzeichnet, dass** eine Abgleicheinrichtung (4) Korrektursignale (ci) erzeugt, um Amplitudenabweichungen und/oder Verzerrungen bei den Richtungskomponenten (ri) zu kompensieren.

6. Winkelmesseinrichtung nach Anspruch 1, **dadurch gekennzeichnet, dass** ein Wert oder mehrere Werte des Geberwinkels (α) als Schwellwerte definiert sind und das Ausgangssignal (sw) ein Über- oder Unterschreiten dieser Schwellwerte anzeigt.

7. Winkelmesseinrichtung nach Anspruch 1, **dadurch gekennzeichnet, dass** in der Auswerteeinrichtung (3) der Geberwinkel (α) mittels einer Interpolation aus benachbarten Geberwinkeln oder benachbarten umlaufenden Winkelwerten (β1, β2) bestimmt ist.

8. Winkelmesseinrichtung nach einem der Ansprüche 1 bis 8, **dadurch gekennzeichnet, dass** sie als monolithisch integrierte Schaltung realisiert ist.

9. Verfahren zur Messung des Winkels eines rotierenden Gebersignals (B), dessen Richtung durch Richtungskomponenten (ki) definiert ist, die den jeweiligen Geberwinkel ($\alpha$) in einer Sinus- und/oder Kosinusfunktion enthalten, dabei werden

   - mittels einer Modulation modulierte Richtungskomponenten (ri) gebildet, wobei die Modulation mittels periodischer Modulationssignale (pi) erfolgt, deren sinus- und kosinusformige Funktion einem rasch umlaufenden Signal entsprechen,

   **dadurch gekennzeichnet, dass**

   - ein taktgesteuerter Winkelgeber (8) als digitalen Wert einen rasch umlaufenden Winkelwert ($\beta$) erzeugt und in Verbindung mit einer in einem digitalen Speicher (7) enthaltenen Tabelle die periodischen Modulationssignale (pi) in einem Funktionsgenerator (6) generiert werden,
   - ein Auswertekriterium, bei dem die Größe der modulierten Richtungssignale (ri) über eine Differenz- oder Summenbildung miteinander oder mit einem definierten Vergleichswert ermittelt wird, zur Feststellung dient, wann der jeweilige Geberwinkel ($\alpha$) und der rasch umlaufende Winkelwert ($\beta$) übereinstimmen, wobei dann der rasch umlaufende Winkelwert ($\beta$) als digitaler Wert direkt oder als abgeleitete analoge oder digitale Größe zur Bildung eines Ausgangssignals (sw) dient.

10. Verfahren zur Messung des Winkels eines rotierenden Gebersignals (B) nach Anspruch 10, **dadurch gekennzeichnet, dass** die periodischen Modulationssignale (pi) sinus- oder kosinusförmige Signale oder so ausgebildet sind, dass sie Verzerrungen des rotierenden Gebersignals (B) kompensieren.

Fig. 1  St. d. T.

Fig. 2
St. d. T.

Fig. 3
St. d. T.

Fig. 4
St. d. T.

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19543562 A1
- US 20030132761 A1
- US 4791366 A
- DE 19819069 A1

**In der Beschreibung aufgeführte Nicht-Patentliteratur**

- **Zeitschrift.** *elektronik industrie,* 2-5